# EUROPÄISCHE PATENTANMELDUNG

(11) **EP 2 230 220 A1**
(43) Veröffentlichungstag der Anmeldung: **22.09.2010**
(21) Anmeldenummer: 10000659.2
(22) Anmeldetag: 22.01.2010
(51) Int. Cl.: C03B 9/40, C03B 9/193

(54) **Pegelmechanismus einer Glasmaschine**

(30) Priorität: 12.03.2009 DE 202009003557 U
(71) Anmelder: GPS GLASPRODUKTIONS-SERVICE GMBH, 45329 Essen (DE)
(72) Erfinder: Diekämper, Lars, 45721 Haltern am See (DE); Timmermann, Bernd, 45329 Essen (DE)
(74) Vertreter: Lelgemann, Karl-Heinz

(57) **Zusammenfassung**

Ein Pegelmechanismus einer Glasmaschine, mittels dem ein Pegelhalter bzw. ein Pegel in Vorformen der Glasmaschine in auf- und abwärtiger Richtung hin und her bewegbar ist, hat einen Druckluftzylinderantrieb (3), mit dessen Kolben (6) der Pegel bzw. Pegelhalter verbunden ist, und dessen Vorschubraum (19) und dessen Rückzugraum (27) über eine erste (16) bzw. eine zweite Ventileinrichtung (24) an eine Druckluftquelle (20, 28) anschließbar sind.

Um bei Beibehaltung des pneumatischen Antriebsprinzips dauerhaft eine zuverlässigere und exaktere Steuerung bzw. Regelung der Kolbenbewegung im Druckluftzylinderantrieb und damit der Hubbewegung des Pegelmechanismus zu ermöglichen, wird vorgeschlagen, dass die erste Ventileinrichtung (16), mittels der der Vorschubraum (19) des Druckluftzylinderantriebs (3) an die Druckluftquelle (21) anschließbar ist, als Proportionalventil (16) ausgebildet ist, dessen Durchflussquerschnitt mittels einer Steuereinheit (12) entsprechend dem Ergebnis eines auf die Kolbenbewegung im Druckluftzylinder (4) bezogenen Soll-Wert/Ist-Wert-Vergleichs regelbar ist.

## Beschreibung

Die vorliegende Erfindung bezieht sich auf einen Pegelmechanismus einer Glasmaschine, mittels dem ein Pegelhalter bzw. ein Pegel in Vorformen der Glasmaschine in auf- und abwärtiger Richtung hin und her bewegbar ist, mit einem Druckluftzylinderantrieb, mit dessen Kolben der Pegel bzw. Pegelhalter verbunden ist, und dessen Vorschubraum und dessen Rückzugraum über eine erste bzw. eine zweite Ventileinrichtung an eine Druckluftquelle anschließbar sind. Derartige Pegelmechanismen, die pneumatisch mittels des Druckluftzylinderantriebs betätigt werden, sind bei aus dem Stand der Technik bekannten Glasmaschinen üblich.

Der Erfindung liegt die Aufgabe zugrunde, einen Pegelmechanismus der vorstehend geschilderten Gattung derart weiterzubilden, dass bei Beibehaltung des pneumatischen Antriebsprinzips dauerhaft eine im Vergleich zum Stand der Technik zuverlässigere und exaktere Steuerung bzw. Regelung der Kolbenbewegung im Druckluftzylinderantrieb und damit der Hubbewegung des Pegelmechanismus möglich ist.

Diese Aufgabe wird erfindungsgemäß dadurch gelöst, dass die erste Ventileinrichtung, mittels der der Vorschubraum des Druckluftzylinderantriebs an die Druckluftquelle anschließbar ist, als Proportionalventil ausgebildet ist, dessen Durchflussquerschnitt mittels einer Steuereinheit entsprechend dem Ergebnis eines auf die Kolbenbewegung im Druckluftzylinder bezogenen Soll-Wert/Ist-Wert-Vergleichs regelbar ist.

Da das die erste Ventileinrichtung ausbildende Proportionalventil sowohl bei der Druckluftbeaufschlagung des Vorschubraums als auch beim Austreten von Luft aus dem Vorschubraum, der mit der Druckluftbeaufschlagung des Rückzugraums einhergeht, hinsichtlich seines Durchflussquerschnitts stufenlos einstellbar ist, kann die Hubbewegung des Pegelmechanismus bzw. die Vorschubbewegung des Kolbens des Druckluftzylinderantriebs und die Rückzugbewegung dieses Kolbens variabel eingestellt werden. So ist es beispielsweise möglich, dass je nach Anforderungsprofil an den Bewegungszyklus des Pegelmechanismus variable bzw. konstante Geschwindigkeiten realisiert werden. Die Start-, End- und Haltepositionen des Kolbens und damit des Pegelmechanismus sind frei wählbar. Hierdurch ergibt sich beispielsweise ein erheblicher Vorteil, wenn in demjenigen Bereich der Glasmaschine, in dem der Pegelmechanismus angeordnet ist, bestimmte Bauteile bzw. Komponenten der Glasmaschine ausgetauscht werden müssen. Da der Pegelmechanismus quasi in jeder beliebigen Position anhalt- und fixierbar ist, kann er je nach auszutauschender Komponente bzw. je nach auszutauschendem Bauteil so positioniert werden, dass die Zugänglichkeit der betreffenden Komponente bzw. des betreffenden Bauteils optimal ermöglicht wird. Aufgrund der erfindungsgemäß möglichen, an unterschiedlichste Anforderungsprofile anpassbaren Steuerung bzw. Regelung der Vorschub- und Rückzuggeschwindigkeit des Kolbens ist es möglich, für jeden Zyklusabschnitt die optimale Geschwindigkeit einzustellen. Aufgrund der erfindungsgemäß möglichen Optimierung der Kolbengeschwindigkeit in jedem Zyklusabschnitt lassen sich sowohl die Vorschub- als auch die Rückzugzeit des Kolbens minimieren. Irgendwelche Veränderungen an den eigentlichen Druckluftzylinderantrieben der Glasmaschine sind nicht erforderlich, da die an den Druckluftzylindern vorhandenen pneumatischen Anschlusselemente weiter verwendet werden können. Darüber hinaus kann erfindungsgemäß auch die Verformung des Glastropfens in den Vorformen kontrollierter und schonender als bei aus dem Stand der Technik bekannten derartigen Pegelmechanismen erfolgen.

Gemäß einer vorteilhaften Ausführungsform des erfindungsgemäßen Pegelmechanismus ist die zweite Ventileinrichtung, mittels der der Rückzugraum des Druckluftzylinderantriebs an die Druckluftquelle anschließbar ist, als Drei/Zwei-Wegeventil ausgebildet. Die Steuerung bzw. Regelung der Rückzugbewegung des Kolbens erfolgt dann durch die mittels der Steuereinheit vorgenommene Einstellung des Durchflussquerschnitts des die erste Ventileinrichtung ausbildenden Proportionalventils in dessen Entspannungsposition, in der der Vorschubraum des Druckluftzylinderantriebs an eine diesem ersten Proportionalventil zugeordnete Dämpfungseinrichtung angeschlossen ist. Die Steuerung bzw. Regelung der Vorschubbewegung des Kolbens erfolgt mittels der Steuereinheit ebenfalls in Verbindung mit dem vorstehend erwähnten ersten Proportionalventil, welches auch in seiner den Vorschubraum des Druckluftzylinderantriebs mit der ihm zugeordneten Druckluftquelle verbindenden Beaufschlagungsposition hinsichtlich seines Durchflussquerschnitts mittels der Steuereinheit stufenlos einstellbar ist.

Wenn gemäß einer weiteren vorteilhaften Ausführungsform des erfindungsgemäßen Pegelmechanismus die zweite Ventileinrichtung, mittels der der Rückzugraum des Druckluftzylinderantriebs an die Druckluftquelle anschließbar ist, als Proportionalventil ausgebildet ist, dessen Durchflussquerschnitt mittels der Steuereinheit entsprechend dem Ergebnis des auf die Kolbenbewegung im Druckluftzylinder bezogenen Soll-Wert/IstWert-Vergleichs steuerbar ist, kann auch der Durchflussquerschnitt der zweiten Ventileinrichtung mittels der Steuereinheit sowohl in der Beaufschlagungsposition des zweiten Proportionalventils als auch in der Entspannungsposition des zweiten Proportionalventils quasi stufenlos eingestellt werden. Hierdurch lässt sich die Qualität der Steuerung bzw. der Regelung des Betriebs des Druckluftzylinderantriebs sowie des nachgeschalteten Pegelmechanismus erheblich verfeinern.

Gemäß einer vorteilhaften konstruktiv-technischen Weiterbildung der Erfindung können die erste und die zweite Ventileinrichtung in Form einer einzigen Ventilbaueinheit ausgestaltet und an eine ihnen gemeinsame Druckluftquelle angeschlossen sein.

Des Weiteren ist es zweckmäßigerweise möglich, das erste Proportionalventil und die als Drei/Zwei-Wegeventil oder als zweites Proportionalventil ausgebildete zweite Ventileinrichtung an eine Dämpfungseinrichtung anzuschließen, mittels der ein den Druckluftzylinderantrieb verlassender Druckluftstrom dämpfbar ist.

Um in einfacher Weise die Ist-Werte zu erzeugen, die für die vorstehend erläuterte Steuerung bzw. Regelung des Betriebs des Pegelmechanismus erforderlich sind, ist es vorteilhaft, wenn einer Kolbenstange des Druckluftzylinderantriebs ein Wegsensor zugeordnet ist, mittels dem die aktuelle Position des Kolbens und damit des Pegelmechanismus der Glasmaschine erfassbar und der an eine Signalauswerteeinheit angeschlossen ist, mittels der die Wegsensorsignale in Positions-, Geschwindigkeits-, und/oder Beschleunigungsdaten bzw. Ist-Werte der Kolbenbewegung im Druckluftzylinder umwandelbar sind.

Entsprechend kann gemäß einer weiteren vorteilhaften Ausgestaltung des erfindungsgemäßen Pegelmechanismus eine Vergleichseinheit vorgesehen sein, an die die Signalauswerteeinheit des Wegsensors und eine Eingabe-/Ausgabeeinheit, mittels der Soll-Werte für die Kolbenbewegung im Druckluftzylinder in die Vergleichseinheit eingebbar sind, angeschlossen sind, und mittels der die Ist-Werte mit den Soll-Werten für die Kolbenbewegung im Druckluftzylinder vergleichbar und ein einer Abweichung der Ist-Werte von den Soll-Werten entsprechendes Signal an die Steuereinheit anlegbar ist.

Um in einfacher Weise die Entscheidung zu treffen, ob sich der Kolben des Druckluftzylinderantriebs im Vorschub- oder im Rückzugbetrieb befindet, ist ein Signalgeber zweckmäßig, mittels dem im Zusammenwirken mit dem Wegsensor ein den Vorschubbetrieb bzw. den Rückzugbetrieb des Kolbens anzeigendes Signal an die Steuereinheit anlegbar ist.

Erfindungsgemäß ist aufgrund der exakteren Bewegungssteuerung insbesondere beim Verformungsvorgang des Glastropfens zum Külbel in den Vorformen der Verschleiß reduzierbar.

Des Weiteren erfolgt bei der vorstehend geschilderten Ausgestaltung des erfindungsgemäßen Pegelmechanismus eine Drucküberwachung innerhalb des Druckluftzylinderantriebs durch die Erfassung der Kolbenbewegung mittels des Wegsensors, die in der Signalauswerteeinheit des Wegsensors verarbeitet wird. Eine schnelle Kolbenbewegung impliziert hierbei einen hohen Druck, wohingegen eine langsame Kolbenbewegung einen vergleichsweise geringen Druck impliziert. Dies gilt während des eigentlichen Verformungsvorgangs selbstverständlich nur eingeschränkt. Durch die beiden Ventileinrichtungen und den Wegsensor ist eine vollständige Kontrolle der Kolbenbewegung möglich, wobei auf dieser Grundlage eine elektronische Geschwindigkeitskontrolle und -regelung realisierbar ist.

Die Hubgeschwindigkeiten des Kolbens sind sowohl beim Vorschub als auch beim Rückzug durch das Zusammenwirken von Wegsensor und Signalgeber genauer einstellbar.

Zum einen ergibt sich im Falle des erfindungsgemäßen Pegelmechanismus eine erhebliche Reduzierung hinsichtlich des Verschleißes der Bauteile desselben, wobei darüber hinaus eine erhöhte Reproduzierbarkeit der Kolbenbewegung möglich ist, was Auswirkungen für die Qualität der in der Glasmaschine hergestellten Glasartikel hat.

Da mittels des Wegsensors und des einen Vorschub- bzw. Rückzugbetrieb anzeigenden Signalgebers die jeweilige Position des Kolbens im Vergleich zum Stand der Technik wesentlich präziser ermittelt werden kann, kann die Hubbewegung des Pegelmechanismus erheblich genauer durchgeführt werden.

Die Positionierung des Pegels ist variabler; je nach herzustellendem Glasartikel kann die obere und untere Umkehr- sowie die Ladeposition des Pegels optimal eingestellt werden.

Zusammenfassend lässt sich feststellen, dass die gesamte Durchführung und Überwachung des Betriebs des Pegelmechanismus verbessert werden kann, wodurch für die entsprechend ausgerüstete Glasmaschine höhere Schnittzahlen erreichbar sind.

Bei der Steuerung bzw. Regelung der Vorschub- und Rückzugbewegung eines Druckluftzylinderantriebs eines Pegelmechanismus einer Glasmaschine werden ein Vorschubraum und ein Rückzugraum des Druckluftzylinderantriebs an eine Druckluftquelle angeschlossen, wobei zumindest der von der dem Vorschubraum des Druckluftzylinderantriebs zugeordneten Druckluftquelle zum Vorschubraum gerichtete Druckluftstrom entsprechend dem Ergebnis eines auf die Kolbenbewegung im Druckluftzylinder bezogenen Soll-Wert/Ist-Wert-Vergleichs stufenlos regelbar ist.

Hierbei kann zur stufenlosen Regelung des zum Vorschubraum gerichteten Druckluftstroms ein Proportionalventil eingesetzt werden.

Zur stufenlosen Regelung auch des zum Rückzugraum des Druckluftzylinderantriebs gerichteten Druckluftstroms kann ebenfalls ein Proportionalventil eingesetzt werden. Sofern eines oder beide der eingesetzten Proportionalventile auch in seiner Entspannungsposition hinsichtlich seines Öffnungsquerschnitts beliebig einstellbar ist, kann auch der den Vorschubraum bzw. den Rückzugraum verlassende Druckluftstrom stufenlos geregelt werden.

Im Folgenden wird die Erfindung anhand von Ausführungsformen unter Bezugnahme auf die Zeichnung näher erläutert.

### Es zeigen:

Figur 1 eine erste Ausführungsform für die Erfindung wesentlicher Bestandteile eines erfindungsgemäßen Pegelmechanismus einer Glasmaschine;
Figur 2 eine zweite Ausführungsform für die Erfindung wesentlicher Bestandteile des erfindungsgemäßen Pegelmechanismus einer Glasmaschine;
   und
Figur 3 eine dritte Ausführungsform für die Erfindung wesentlicher Bestandteile des erfindungsgemäßen Pegelmechanismus einer Glasmaschine.

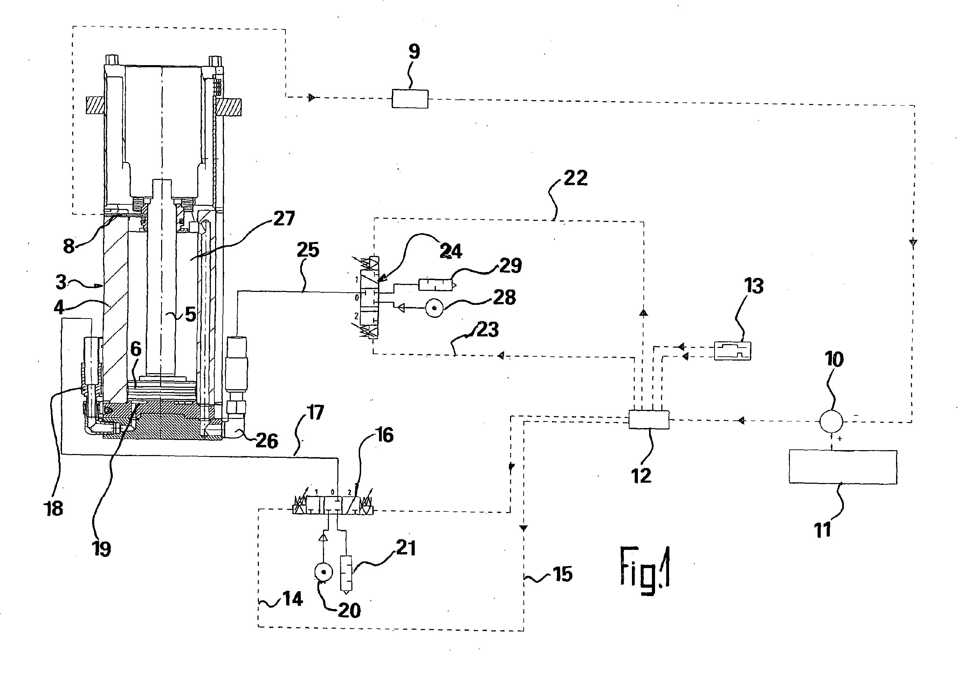

Ein anhand der in den Figuren 1 bis 3 gezeigten Ausführungsformen erläuterter erfindungsgemäßer Pegelmechanismus einer im übrigen in den Figuren nicht gezeigten Glasmaschine dient dazu, nach dem Einbringen von Glastropfen in Vorformen der Glasmaschine, die in den Vorformen befindlichen Glastropfen zu Külbeln zu formen. Hierbei bewegt sich der Pegelmechanismus in einer Hubbewegung zwischen einem oberen und einem unteren Umkehrpunkt, wobei dazwischen eine sog. Ladeposition vorgesehen ist, in der der Pegel sich befindet, wenn in die Vorform ein Glastropfen eingeleitet wird.

Als Antriebselement für den Pegelmechanismus dient ein in den Figuren 1 bis 3 gezeigter Druckluftzylinderantrieb 3. Der Druckluftzylinderantrieb 3 hat einen Druckluftzylinder 4, in dem ein mit einer Kolbenstange 5 verbundener Kolben 6 in auf- und abwärtiger Richtung bewegbar ist; ein Pegelhalter des im übrigen in den Figuren 1 bis 3 nicht gezeigten Pegelmechanismus ist an der Kolbenstange 5 fixiert, und zwar an deren aus dem Druckluftzylinder 4 vorstehenden Endabschnitt.

In den dargestellten Ausführungsformen ist im oberen Bereich des Druckluftzylinders 4 ein Wegsensor 8 vorgesehen, mittels dem die Bewegung der Kolbenstange 5 und damit des Kolbens 6 innerhalb des Druckluftzylinders 4 des Druckluftzylinderantriebs 3 kontinuierlich erfassbar ist. Der Wegsensor 8 ist an eine Signalauswerteeinheit 9 angeschlossen, in der die Wegsensorsignale in auf die Kolbenbewegung im Druckluftzylinder 4 bezogene Positions-, Geschwindigkeits- und/oder Beschleunigungsdaten umwandelbar sind. Bei den seitens der Signalauswerteeinheit 9 erzeugten und ausgegebenen Daten handelt es sich um die Ist-Werte für die Steuerung bzw. Regelung des Betriebs des Druckluftzylinderantriebs 3 des Pegelmechanismus.

Von der Signalauswerteeinheit 9 werden die vorstehend erwähnten Ist-Werte an eine Vergleichseinheit 10 weitergeleitet, die außerdem mit einer Eingabe-/Ausgabeeinheit 11 verbunden ist, mittels der Soll-Werte für die Position, die Geschwindigkeit und/oder die Beschleunigung der Kolbenbewegung im Druckluftzylinder 4 zur Vergleichseinheit 10 leitbar sind. In der Vergleichseinheit 10 werden die Ist-Werte mit den Soll-Werten verglichen; eine Abweichung der Ist-Werte von den Soll-Werten wird von der Vergleichseinheit 10 an eine Steuereinheit 12 weitergeleitet. Die Steuereinheit 12 ist außerdem an einen Signalgeber 13 angeschlossen, der der Steuereinheit 12 anzeigt, ob sich der Druckluftzylinderantrieb 3 im Vorschubbetrieb, in dem sich der Kolben 6 in aufwärtiger Richtung bewegt, oder im Rückzugbetrieb befindet, in dem sich der Kolben 6 in abwärtiger Richtung bewegt. Hierzu können ergänzend entsprechende Signale, die vom Wegsensor 8 erfasst werden, berücksichtigt werden.

Die Steuereinheit 12 ist über entsprechende Steuerleitungen 14, 15 an ein erstes Proportionalventil 16 angeschlossen. Das erste Proportionalventil 16 ist seinerseits über eine Druckluftleitung 17 und am Druckluftzylinder 4 vorgesehene Anschlusselemente 18 mit dem Vorschubraum 19 des Druckluftzylinderantriebs 3 verbunden, der bei den in den Figuren 1 bis 3 gezeigten Ausführungsformen stets unterhalb des Kolbens 6 des Druckluftzylinderantriebs 3 angeordnet ist.

Das erste Proportionalventil 16 hat eine Sperrstellung "0", eine Beaufschlagungsposition "2" und eine Entspannungsposition "1".

In der Sperrstellung "0" besteht keine Verbindung zwischen der Druckluftleitung 17 und einer in Bezug auf die Druckluftleitung 17 auf der anderen Seite des ersten Proportionalventils 16 angeordneten Druckluftquelle 20 bzw. einer ebenfalls auf dieser Seite des ersten Proportionalventils 16 angeordneten Dämpfungseinrichtung 21.

In der Beaufschlagungsposition "2" steht die Druckluftquelle 20 über das erste Proportionalventil 16 in Verbindung mit der Druckluftleitung 17 und damit dem Vorschubraum 19 des Druckluftzylinderantriebs 3. Der Durchfluss durch das erste Proportionalventil 16 ist mittels der Steuereinheit 12 stufenlos einstellbar.

In der Entspannungsposition "1" schaltet das erste Proportionalventil 16 eine Verbindung zwischen der Druckluftleitung 17 und damit dem Vorschubraum 19 des Druckluftzylinderantriebs 3 mit der Dämpfungseinrichtung 21. Die im Vorschubraum 19 vorhandene Luft kann somit zur Dämpfungseinrichtung 21 abströmen, wobei auch in diesem Zustand des ersten Proportionalventils 16 der Durchfluss mittels der Steuereinheit 12 stufenlos geregelt werden kann.

Des Weiteren ist die Steuereinheit 12 über Steuerleitungen 22, 23 an ein zweites Proportionalventil 24 angeschlossen. Das zweite Proportionalventil 24 ist seinerseits über eine Druckluftleitung 25 und am Druckluftzylinder 4 vorgesehene Anschlusselemente 26 mit dem Rückzugraum 27 des Druckluftzylinderantriebs 3 verbunden, der bei den in den Figuren 1 bis 3 gezeigten Ausführungsformen stets oberhalb des Kolbens 6 des Druckluftzylinderantriebs 3 angeordnet ist.

Das zweite Proportionalventil 24 hat eine Sperrstellung "0", eine Beaufschlagungsposition "1" und eine Entspannungsposition "2".

In der Sperrstellung "0" besteht keine Verbindung zwischen der Druckluftleitung 25 und einer in Bezug auf die Druckluftleitung 25 auf der anderen Seite des zweiten Proportionalventils 24 angeordneten Druckluftquelle 28 bzw. einer ebenfalls auf dieser Seite des zweiten Proportionalventils 24 angeordneten Dämpfungseinrichtung 29.

In der Beaufschlagungsposition "1" steht die Druckluftquelle 28 über das zweite Proportionalventil 24 in Verbindung mit der Druckluftleitung 25 und damit dem Rückzugraum 27 des Druckluftzylinderantriebs 3. Der Durchfluss durch das zweite Proportionalventil 24 ist mittels der Steuereinheit 12 stufenlos einstellbar.

In der Entspannungsposition "2" schaltet das zweite Proportionalventil 24 eine Verbindung zwischen der Druckluftleitung 25 und damit dem Rückzugraum 27 des Druckluftzylinderantriebs 3 mit der Dämpfungseinrichtung 29. Die im Rückzugraum 27 vorhandene Luft kann somit zur Dämpfungseinrichtung 29 abströmen, wobei auch in diesem Zustand des zweiten Proportionalventils 24 der Durchfluss mittels der Steuereinheit 12 stufenlos geregelt werden kann.

Im Betrieb des vorstehend geschilderten Pegelmechanismus wird in dem Augenblick, wenn der Pegel bzw. der Pegelmechanismus aus der in den Figuren 1 bis 3 gezeigten unteren Umkehrposition in aufwärtiger Richtung bewegt werden soll, seitens der Steuereinheit 12, die mit dem Signalgeber 13 zusammenwirkt, über die Steuerleitungen 14, 15 bzw. 22, 23 ein Signal an das erste 16 bzw. das zweite Proportionalventil 24 weitergeleitet.

Das erste Proportionalventil 16 schaltet aus der Sperrstellung "0" in die Beaufschlagungsposition "2". Die dem ersten Proportionalventil 16 zugeordnete Druckluftquelle 20 ist dann mit dem Vorschubraum 19 des Druckluftzylinderantriebs 3 verbunden. Das zweite Proportionalventil 24 schaltet von der Sperrstellung "0" in die Entspannungsposition "2". Der Rückzugraum 27 des Druckluftzylinderantriebs 3 ist dann mit der Dämpfungseinrichtung 29 verbunden.

Mittels der dem ersten Proportionalventil 16 zugeordneten Druckluftquelle 20 wird im Zusammenwirken mit dem hinsichtlich seines Durchflussquerschnitts gesteuerten ersten Proportionalventil 16 ein geregelter Druck aufgebaut, mittels dem der Kolben 6 des Druckluftzylinderantriebs 3 in in den Figuren 1 bis 3 aufwärtiger Richtung verstellt wird. Durch die mit dem Kolben 6 fest verbundene Kolbenstange 5 wird die Kolbenbewegung auf den mit der Kolbenstange 5 verbundenen Pegelhalter übertragen.

Aufgrund der möglichen Regelung des Durchflusses durch das sich in seiner Beaufschlagungsposition "2" befindliche erste Proportionalventil 16 mittels der Steuereinheit 12 können unterschiedliche Zyklen bei der Druckbeaufschlagung des Vorschubraums 19 gefahren werden, d.h., die Kolbenbewegung innerhalb des Druckluftzylinders 4 des Druckluftzylinderantriebs 3 kann quasi beliebig variiert und auch bei hohen, auf die Verformung des Glastropfens basierenden Gegendrücken nahe bzw. am Sollbewegungsablauf gehalten.

Auf die Kolbenbewegung bezogene Daten werden mittels des im Druckluftzylinder 4 an der Kolbenstange 5 vorgesehenen Wegsensors 8 erfasst. Diese Daten werden vom Wegsensor 8 zur Signalauswerteeinheit 9 weitergeleitet.

In der Vergleichseinheit 10 werden die aus der Signalauswerteeinheit 9 stammenden Ist-Werte der Kolbenbewegung mit von der Eingabe-/Ausgabeeinheit 11 an die Vergleichseinheit 10 übermittelten Soll-Werten der Kolbenbewegung verglichen. Das Ergebnis dieses Vergleichs wird in Form von Korrektursignalen an die Steuereinheit 12 weitergegeben; diese regelt über entsprechende Signale die Positionierung der Proportionalventile 16, 24, wodurch die Ist-Werte der Kolbenbewegung an die Soll-Werte derselben angepasst werden. Beispielsweise kann in jedem Bewegungsabschnitt der aufwärts gerichteten Vorschubbewegung des Kolbens 6 die gewünschte Bewegungsgeschwindigkeit eingestellt werden.

Wenn der Kolben 6 des Druckluftzylinderantriebs 3 seine der in den Figuren 1 bis 3 gezeigten niedrigsten Position entgegengesetzte höchste Position erreicht, wird seitens des Signalgebers 13 im Zusammenwirken mit dem Wegsensor 8 das die entsprechende Position des Kolbens 6 anzeigende Signal an die Steuereinheit 12 gegeben.

Für den Abwärtshub des Pegels bzw. des Pegelmechanismus gibt die Steuereinheit 12 über die Steuerleitungen 14, 15 bzw. 22, 23 entsprechende Steuersignale an das erste 16 bzw. das zweite Proportionalventil 24. Das zweite Proportionalventil 24 schaltet aus der Entspannungsposition "2" in die Beaufschlagungsposition "1". Hierdurch wird der Rückzugraum 27 des Druckluftzylinderantriebs 3 mit der Druckluftquelle 28 verbunden. Druckluft aus der Druckluftquelle 28 wird über das zweite Proportionalventil 24 in den Rückzugraum 27 eingeleitet. Des Weiteren schaltet das erste Proportionalventil 16 aus der Beaufschlagungsposition "2" in die Entspannungsposition "1". Hierdurch wird die dem ersten Proportionalventil 16 zugeordnete Dämpfungseinrichtung 21 mit dem Vorschubraum 19 des Druckluftzylinderantriebs 3 verbunden.

Die dem ersten Proportionalventil 16 zugeordnete Druckluftquelle 20 kann im Vergleich zur dem zweiten Proportionalventil 24 zugeordneten Druckluftquelle 28 einen unterschiedlichen Druck aufweisen, was im Vergleich zur Rückzuggeschwindigkeit des Kolbens 6 eine unterschiedliche Vorschubgeschwindigkeit desselben zur Folge haben kann.

Auch die Rückzuggeschwindigkeit des Kolbens 6 kann mittels der beiden, durch die Steuereinheit 12 hinsichtlich ihres Durchflussquerschnitts stufenlos steuer- bzw. regelbaren Proportionalventile 16, 24 während des Rückzugzyklus des Kolbens 6 beliebig eingestellt werden. Hierdurch kann auch die Rückzugbewegung des Kolbens quasi beliebig und stufenlos ausgestaltet werden.

Nach Erreichen der in den Figuren 1 bis 3 jeweils gezeigten Position des Kolbens 6 des Druckluftzylinderantriebs 3 beginnt der vorstehend geschilderte Arbeitsablauf erneut.

Bei dem vorstehend geschilderten Pegelmechanismus ist wegen der zwei vorhandenen, mittels der Steuereinheit 12 steuer- bzw. regelbaren Proportionalventile 16, 24 eine exakte Regelung beim Zuführen bzw. Abführen der Druckluft möglich, wodurch in entsprechender Weise die Hubbewegung des Pegelmechanismus sowohl bei der Vorschubbewegung des Kolbens 6 als auch bei der Rückzugbewegung des Kolbens 6 exakt geregelt werden kann.

Des Weiteren ist es möglich, den Kolben 6 und damit den Pegelmechanismus quasi in jeder beliebigen Position zwischen der obersten und untersten Kolbenstellung anzuhalten, wozu lediglich eine entsprechende Einstellung der beiden Proportionalventile 16, 24 mittels der Steuereinheit 12 erforderlich ist. Falls der Kolben 6 innerhalb des Druckluftzylinders 4 in unerwünschter Weise sich zu bewegen beginnt bzw. wegrutscht, wird dies durch den Wegsensor 8 ermittelt und kann durch entsprechende Einstellsignale, die von der Steuereinheit 12 an die beiden Proportionalventile 16, 24 weitergeleitet werden, ausgeglichen werden. Die quasi in jeder denkbaren Stellung des Pegelmechanismus gegebene Anhaltemöglichkeit bietet erhebliche Erleichterungen beim Austausch von Komponenten der Glasmaschine unter den üblicherweise im Bereich des Pegelmechanismus sehr beschränkten räumlichen Verhältnissen.

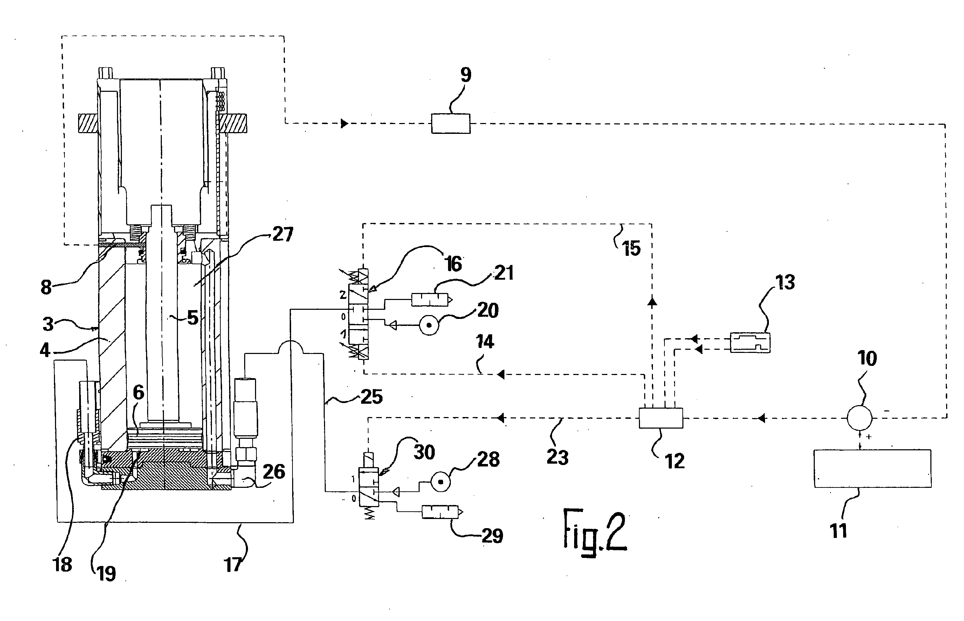

Bei dem in Figur 2 gezeigten Ausführungsbeispiel des erfindungsgemäßen Pegelmechanismus ist anstelle des zweiten Proportionalventils 24, wie es bei der in Figur 1 gezeigten Ausführungsform vorhanden ist, ein Drei/Zwei-Wegeventil 30 vorgesehen.

Bei der Vorschubbewegung des Kolbens 6 kann daher der Strom der aus dem Rückzugraum 27 des Druckluftzylinderantriebs 3 abströmenden Luft durch die Druckluftleitung 25 nicht geregelt werden. Eine Steuerung bzw. Regelung bei der Vorschubbewegung des Kolbens 6 ist somit lediglich mittels des ersten Proportionalventils 16, dessen Durchflussquerschnitt mittels der Steuereinheit 12 verstellbar ist, möglich.

Bei der Rückzugbewegung des Kolbens 6 kann der Strom der durch die Druckluftleitung 25 in den Rückzugraum 27 eintretenden Druckluft nicht geregelt werden. Die Rückzugbewegung des Kolbens 6 lässt sich bei der in Figur 2 gezeigten Ausführungsform nur dadurch regeln, dass der Durchflussquerschnitt des ersten Proportionalventils 16, das sich in seiner Entspannungsposition "1" befindet, mittels der Steuereinheit 12 geregelt werden kann.

Zur Vorschubbewegung des Kolbens 6 schaltet das erste Proportionalventil 16 aus der Sperrstellung "0" in die Beaufschlagungsposition "2". Der Vorschubraum 19 des Druckluftzylinderantriebs 3 ist mit der dem ersten Proportionalventil 16 zugeordneten Druckluftquelle 21 verbunden. Das Drei/ZweiWegeventil 30 schaltet in seine Entspannungsposition "0", wodurch der Rückzugraum 19 des Druckluftzylinderantriebs 3 mit der dem Drei/Zwei-Wegeventil 30 zugeordneten Dämpfungseinrichtung 21 verbunden wird.

Zur Rückzugbewegung des Kolbens 6 wird das erste Proportionalventil 16 in dessen Entspannungsposition "1" geschaltet. Hierdurch wird der Vorschubraum 19 des Druckluftzylinderantriebs 3 mit der dem ersten Proportionalventil 24 zugeordneten Dämpfungseinrichtung 21 verbunden. Das Drei/ZweiWegeventil 30 wird in seine Beaufschlagungsposition "1" verbracht. Hierdurch wird die dem Drei/Zwei-Wegeventil 30 zugeordnete Druckluftquelle 20 mit dem Rückzugraum 19 des Druckluftzylinderantriebs 3 verbunden.

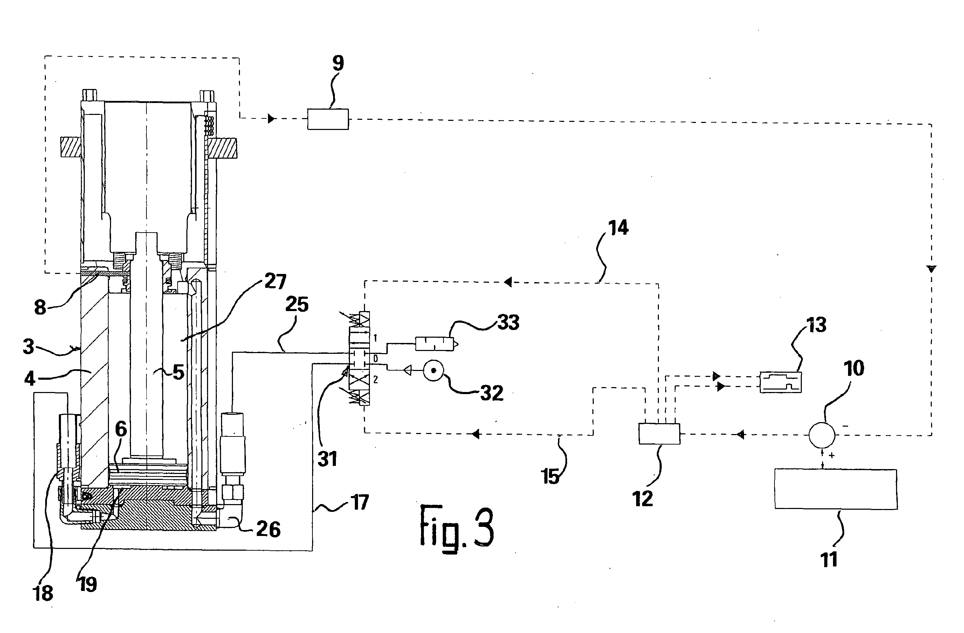

In Figur 3 ist eine Ausführungsform des erfindungsgemäßen Pegelmechanismus beschrieben, bei der das erste Proportionalventil 16 und das zweite Proportionalventil 24 in Form einer einzigen Ventilbaueinheit 31 ausgestaltet sind. Der Ventilbaueinheit 31 ist eine beiden durch sie verwirklichten Proportionalventilen gemeinsame Druckluftquelle 32 und eine beiden durch die Ventilbaueinheit 31 verwirklichten Proportionalventilen gemeinsame Dämpfungseinrichtung 33 zugeordnet. Die Arbeitsweise der Ausführungsform gemäß Figur 3 entspricht im Wesentlichen der der anhand Figur 1 geschilderten Ausführungsform.

Schaltet die Ventilbaueinheit 31 aufgrund entsprechender Signale der Steuereinheit 12 in die Position "2", ist eine Verbindung zwischen der der Ventilbaueinheit 31 zugeordneten Druckluftquelle 32 mit dem Rückzugraum 27 des Druckluftzylinderantriebs 3 hergestellt. Außerdem ist der Vorschubraum 19 des Druckluftzylinderantriebs 3 mit der der Ventilbaueinheit 31 zugeordneten Dämpfungseinrichtung 33 verbunden. Hierdurch wird der Kolben 6 des Druckluftzylinderantriebs 3 in in den Figuren 1 bis 3 in abwärtiger Richtung bewegt.

Wenn die Ventilbaueinheit 31 mittels der Steuereinheit 12 in die Position "1" geschaltet wird, wird der Vorschubraum 19 des Druckluftzylinderantriebs 3 mit der der Ventilbaueinheit 31 zugeordneten Druckluftquelle 32 verbunden, wohingegen der Rückzugraum 27 des Druckluftzylinderantriebs 3 mit der der Ventilbaueinheit 31 zugeordneten Dämpfungseinrichtung 33 verbunden wird. Der Kolben 6 des Druckluftzylinderantriebs 3 wird in in den Figuren 1 bis 3 aufwärtiger Richtung bewegt.

## Patentansprüche

1. Pegelmechanismus einer Glasmaschine, mittels dem ein Pegelhalter bzw. ein Pegel in Vorformen der Glasmaschine in auf- und abwärtiger Richtung hin und her bewegbar ist, mit einem Druckluftzylinderantrieb (3), mit dessen Kolben (6) der Pegel bzw. Pegelhalter verbunden ist, und dessen Vorschubraum (19) und dessen Rückzugraum (27) über eine erste (16) bzw. eine zweite Ventileinrichtung (24; 30) an eine Druckluftquelle (20, 28) anschließbar sind, **dadurch gekennzeichnet, dass** die erste Ventileinrichtung (16), mittels der der Vorschubraum (19) des Druckluftzylinderantriebs (3) an die Druckluftquelle (21) anschließbar ist, als Proportionalventil (16) ausgebildet ist, dessen Durchflussquerschnitt mittels einer Steuereinheit (12) entsprechend dem Ergebnis eines auf die Kolbenbewegung im Druckluftzylinder (4) bezogenen SollWert/Ist-Wert-Vergleichs regelbar ist.

2. Pegelmechanismus nach Anspruch 1, bei dem die zweite Ventileinrichtung (30), mittels der der Rückzugraum (27) des Druckluftzylinderantriebs (3) an die Druckluftquelle (28) anschließbar ist, als Drei/Zwei-Wegeventil (30) ausgebildet ist.

3. Pegelmechanismus nach Anspruch 1, bei dem die zweite Ventileinrichtung (24), mittels der der Rückzugraum (27) des Druckluftzylinderantriebs (3) an die Druckluftquelle (28) anschließbar ist, als Proportionalventil (24) ausgebildet ist, dessen Durchflussquerschnitt mittels der Steuereinheit (12) entsprechend dem Ergebnis des auf die Kolbenbewegung im Druckluftzylinder (4) bezogenen Soll-Wert/Ist-Wert-Vergleichs steuerbar ist.

4. Pegelmechanismus nach einem der Ansprüche 1 bis 3, bei dem die erste und die zweite Ventileinrichtung in Form einer einzigen Ventilbaueinheit (31) ausgestaltet und an eine ihnen gemeinsame Druckluftquelle (32) angeschlossen sind.

5. Pegelmechanismus nach einem der Ansprüche 1 bis 4, bei dem das erste Proportionalventil (16) und die als Drei/ZweiWegeventil (30) oder als zweites Proportionalventil (24) ausgebildete zweite Ventileinrichtung an eine Dämpfungseinrichtung (29, 21, 33) anschließbar sind, mittels der ein den Druckluftzylinderantrieb (3) verlassender Druckluftstrom dämpfbar ist.

6. Pegelmechanismus nach einem der Ansprüche 1 bis 5, bei dem einer Kolbenstange (5) des Druckluftzylinderantriebs (3) ein Wegsensor (8) zugeordnet ist, mittels dem die aktuelle Position des Kolbens (6) und damit des Pegelmechanismus bzw. des Pegels der Glasmaschine erfassbar und der an eine Signalauswerteeinheit (9) angeschlossen ist, mittels der die Wegsensorsignale in Positions-, Geschwindigkeits- und/oder Beschleunigungsdaten bzw. Ist-Werte der Kolbenbewegung im Druckluftzylinder (4) umwandelbar sind.

7. Pegelmechanismus nach Anspruch 6, mit einer Vergleichseinheit (10), an die die Signalauswerteeinheit (9) des Wegsensors (8) und eine Eingabe-/Ausgabeeinheit (11), mittels der Soll-Werte für die Kolbenbewegung im Druckluftzylinder (4) in die Vergleichseinheit (10) eingebbar sind, angeschlossen sind, und mittels der die Ist-Werte mit den Soll-Werten für die Kolbenbewegung im Druckluftzylinder (4) vergleichbar und ein eine Abweichung der Ist-Werte von den Soll-Werten entsprechendes Signal an die Steuereinheit (12) anlegbar ist.

8. Pegelmechanismus nach Anspruch 6 oder 7, mit einem Signalgeber (13), mittels dem im Zusammenwirken mit dem Wegsensor (8) ein den Vorschubbetrieb bzw. den Rückzugbetrieb des Kolbens (6) anzeigendes Signal an die Steuereinheit (12) anlegbar ist.
